# EUROPEAN PATENT SPECIFICATION

(11) **EP 1 765 965 B1**
(45) Date of publication and mention of the grant of the patent: **27.06.2012**
(21) Application number: 05749904.8
(22) Date of filing: 04.05.2005
(51) Int. Cl.: C11D 1/06

(54) **DECOMPOSING SURFACTANT**
SICH ZERSETZENDES TENSID
TENSIOACTIF DE DECOMPOSITION

(30) Priority: 04.05.2004 US 837617; 04.05.2004 SE 0401161
(43) Date of publication of application: 28.03.2007
(73) Proprietor: YKI, Ytkemiska Institutet AB, 11486 Stockholm (SE)
(72) Inventor: ANDERSSON, Martin, SE-122 41 Enskede (SE); KRONBERG, Bengt, SE-115 30 Stockholm (SE)
(74) Representative: Kånge, Lars Rikard
(86) International application number: PCT/SE2005/000649
(87) International publication number: WO 2005/105963

(56) References cited:
- EP-A1- 0 207 580
- WO-A2-03/037837
- US-A- 4 561 913
- US-A- 5 614 564
- BASSETTI M. ET AL: 'Chemioselectivity in the presence of surfactants. I. C- vs. O-alkylation in Beta-dicarbonyl compounds (*)(**)(***)' GAZETTA CHIMICA ITALIANA vol. 116, 1986, pages 583 - 585, XP002991603
- DATABASE WPI Week 199238, Derwent Publications Ltd., London, GB; Class D25, AN 1992-312377, XP002991604 & JP 4 217 972 A (OKAHARA M) 07 August 1992
- DATABASE WPI Week 198906, Derwent Publications Ltd., London, GB; Class B05, AN 1989-211484, XP002991605 & JP 1 149 751 A (AGENCY OF IND SCI & TECHNOLOGY) 12 June 1989
- DATABASE WPI Week 199315, Derwent Publications Ltd., London, GB; Class A41, AN 1993-121317, XP002991606 & JP 5 058 955 A (NIPPON MINING CO) 09 March 1993

## Description

### Technical field of the invention

The present invention relates to the use of a compound having a hydrophobic moiety attached to a hydrophilic moiety, the hydrophilic moiety comprising a β-keto acid group, or a salt thereof, as a surfactant, to a dispersion comprising said surfactant, to a method for breaking a dispersion, and to applications making use of the surfactant properties of the compound. The present invention further relates to use of an ester or amide of the compound as a surfactant precursor.

### Background art

So-called cleavable surfactants have been known for several years and the different classes of such surfactants have been nicely reviewed by Stjerndahl et al. in "Cleavable Surfactants, Novel Surfactants - Preparation, Applications, and Biodegradability", 2 ed., Holmberg ed., Marcel Dekker, Inc., USA, 2003. A main reason for the development of cleavable surfactants has been environmental concern and a desire for biodegradable surfactants. The main types of cleavable surfactants known today are:
1) Surfactants labile at acidic conditions
2) Surfactants labile at alkaline conditions
3) Light sensitive surfactants
4) Surfactants that degrade in contact with specific chemicals
5) Thermolabile surfactants

According to Stjerndahl, most cleavable surfactants contain a hydrolysable bond and thus belong to type 1 or 2. For these surfactants, a change of pH is needed to initiate cleaving of the surfactant. The degradation product is often a soap or a long-chain alcohol, of which at least the former is clearly surface active. Thus, the cleaving of these compounds does not automatically imply that surface activity is lost.

In the case of light sensitive surfactants (type 3), the surfactant has to be exposed to light for a certain amount of time to obtain the desired cleaving.

Surfactants that decompose in contact with specific chemicals (type 4), e.g. ozone cleavable surfactants, are used in specific applications only.

For the group of known thermolabile surfactants (type 5), the decomposition rate is intended to be controlled by regulation of the temperature.

Hayashi et al. (JAOCS 62(3):555-557 (1985)) report preparation of amine oxide surfactants by oxidation of 2-alkoxy-N,N-dimethylethylamines with hydrogen peroxide. The 2-alkoxy-N,N-dimethylethylamine N-oxide surfactants formed were good foam stabilizers and stable up to 100 °C, but decomposed rapidly to vinyl ethers at 150 °C. Hence, the decomposition temperature of these surfactants is not compatible with use in aqueous compositions.

GB 923,449 discloses that unsaturated polymerisable compounds can be advantageously polymerised in aqueous medium and in the presence of dispersing agents and activators by using as a dispersing agent a salt of a partial ester of an aliphatic polycarboxylic acid with one or more alcohols having 3 to 20 carbon atoms and heating the resultant polymer emulsion at temperatures between 60 and 200 °C. However, these dispersing agents have the drawback of being intrinsically sensitive to alkaline and acidic conditions, causing premature degradation of the surfactant under such conditions.

Conclusively, existing cleavable surfactants and dispersing agents of types 1-4 are either adapted for speciality applications only (being light sensitive or dependent on a specific substance) or cannot be utilised and cleaved at substantially constant pH conditions. Furthermore, cleaving does not always result in loss of surface activity. Existing thermolabile surfactants (type 5) are not suitable in water based applications and/or under alkaline or acidic conditions.

### Summary of the invention

An object of the present invention is to provide a deactivable thermolabile surfactant, the decomposition rate of which can be controlled within wide limits by altering the temperature in a range starting already at or below room temperature and with no need to go to extremely high temperatures (e.g. over the boiling point of water) for fast decomposition.

Another object of the invention is to provide a surfactant that is unsusceptible to premature and/or thermally uncontrollable decomposition in a wide pH range (e.g. at alkaline conditions).

Yet another object of the invention is to provide a surfactant which may be designed to give only non-toxic products upon decomposition.

A further object of the invention is to provide a dispersion comprising a thermolabile surfactant, said dispersion having a thermally controllable delay time before breaking and a thermally controllable breaking rate.

A further object of the invention is to provide a method for breaking a dispersion.

The above-mentioned objects as well as other objects of the invention, which should be apparent to a person skilled in the art after having studied the description below, are accomplished by the use of a compound having a hydrophobic moiety attached to a hydrophilic moiety, wherein the hydrophilic moiety comprises a β-keto acid group and the hydrophobic moiety is attached via a bond from a carbon or an oxygen of the hydrophobic moiety to a carbon of the β-keto acid group, provided that the β-carbon of the β-keto acid group does not form part of a carboxyl or ester group, or a salt thereof, as a surfactant.

Thus, the invention provides use, as a surfactant, of a compound having the general formula I 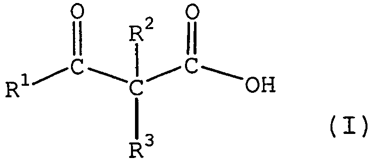 wherein at least one of R¹, R² and R³ is a hydrophobic moiety,
R² and/or R³ as hydrophobic moiety being independently selected from -C-R⁴ and -O-R⁴, R¹ as hydrophobic moiety being -C-R⁴, R⁴ being any hydrophobic group;
with the proviso that R¹ is not -O-R⁵, wherein R⁵ is any substituent;
or of a salt of said compound.

The surfactant of the present invention has been found to be susceptible to temperature controlled decomposition into CO₂, HCO₃⁻ or CO₃²⁻ (depending on pH) and an oil-like (if liquid), hydrophobic residue, thereby reducing its surface activity. Furthermore, said surfactant is stable to premature and/or thermally uncontrollable degradation over a wide pH range and is thus protected from unintentional decomposition at alkaline, neutral or acidic conditions (generally at pH ≥ p*Kₐ*). Depending on present pH conditions, a salt of the described surfactant may be active.

A further characteristic of the surfactant of the present invention is that its rate of decomposition, and thus its rate of inactivation, can be effectively controlled by temperature at substantially constant pH conditions. Its rate of decomposition generally increases with increasing temperature. The rate of decomposition is substantially independent of pH as long as pH > pKₐ. Furthermore, the decomposition rate of the surfactant of the present invention may be accelerated by catalysts, such as decarboxylases, or simple amino acids, like glycine.

Neither the attachment of the hydrophobic moiety to the hydrophilic moiety via a bond from a carbon of the hydrophobic moiety, nor from an oxygen of the hydrophobic moiety, are susceptible to premature degradation and/or thermally uncontrolled degradation under the above-presented conditions.

In many common situations, e.g. for many commonly used hydrophobic moieties, the hydrophobic moiety is preferably attached via a bond from a carbon of the hydrophobic moiety. With reference to formula I, this is the equivalent of the hydrophobic moiety being -C-R⁴, wherein R⁴ is a hydrophobic group.

From a synthesis point of view, the hydrophobic moiety is preferably attached to the α-carbon of the β-keto acid group. With reference to formula I, this is the equivalent of either one, or both, of R² and R³ being the hydrophobic moiety or moieties of the compound. With respect to the function of the surfactant, however, it may as well be attached to the β-carbon of the β-keto acid group. With reference to formula I, this is the equivalent of R¹ being the hydrophobic moiety of the compound. Optionally, more than one hydrophobic moiety may be attached to the carbon(s) of the hydrophilic moiety. If the hydrophobic moiety is attached to the α-carbon, the β-keto acid group is preferably an acetoacetic acid group. Such a group allows for simple and cost effective synthesis and good function of the surfactant.

It is well known to the skilled man that a wide selection of hydrophobic groups exists and that their detailed structures are not always of critical importance. Thus, any hydrophobic group, not itself susceptible to degradation in aqueous solution, creating an amphiphilic compound when attached to the hydrophilic moiety may be utilised in the present invention. As non-limiting examples, the hydrophobic moiety or moieites may independently be a straight-chain, branched-chain or cyclic, saturated or unsaturated, optionally substituted, aliphatic group; an optionally substituted aromatic group; an optionally substituted hydrophobic polyoxyalkylene group, such as an optionally substituted polyoxypropylene group; an optionally substituted perfluoroalkyl group; an optionally substituted polysiloxane group; a lignin or rosin derivative; or a combination thereof.

As used herein, the term "substituted", in relation to the hydrophobic moiety or moieties, relates to the substitution of a organic group with any substituents not changing the hydrophobic nature of said moiety or the amphiphilic nature of the compound of the invention.

The hydrophobic moiety or moieties is/are preferably independently selected from a straight-chain, branched-chain or cyclic, saturated or unsaturated, optionally substituted, aliphatic group; an optionally substituted aromatic group; and any combination thereof. More preferably, the hydrophobic moiety or moieties is/are independently selected from a straight-chain or branched-chain, saturated or unsaturated, optionally substituted, C₁-C₃₀ alkyl, or C₈-C₂₂ alkyl. In a most preferred embodiment, the hydrophobic moiety/moieties is/are dodecyl. Said groups are common, cheap, safe and well-functioning hydrophobic groups.

Non-limiting combinations of hydrophobic groups in the R¹, R² and R³ positions of formula I are .listed below. Furthermore, all combinations of different hydrophobic substituents R² and R³ are possible, such as a compound having -(CH₂)₁₇-CH₃ as R² and -CH₂-(O-(CH₂)₃)₄-OH as R³. The resulting compounds may be used as surfactants in accordance with the present invention.

**Table 1**

| Hydrophobic substituents in compounds for use as surfactants in accordance with the present invention | | |
|---|---|---|
| Cpd # | R¹ | R² and/or R³ |
| 1 | -H | -(CH₂)₁₁-CH₃ |
| 2 | -CH₃ | -(CH₂)₁₁-CH₃ |
| 3 | -CH₂-CH₃ | -(CH₂)₁₁-CH₃ |
| 4 | -CH-(CH₃)₂ | -(CH₂)₁₁-CH₃ |
| 5 | -H | -(CH₂)₉-CH₃ |
| 6 | -CH₃ | -(CH₂)₉-CH₃ |
| 7 | -CH₂-CH₃ | -(-CH₂)₉-CH₃ |
| 8 | -CH-(CH₃)₂ | -(-CH₂)₉-CH₃ |
| 9 | -H | -(CH₂)₁₃-CH₃ |
| 10 | -CH₃ | -(CH₂)₁₃-CH₃ |
| 11 | -CH₂-CH₃ | -(CH₂)₁₃-CH₃ |
| 12 | -CH-(CH₃)₂ | -(CH₂)₁₃-CH₃ |
| 13 | -H | -(CH₂)₁₅-CH₃ |
| 14 | -CH₃ | -(CH₂)₁₅-CH₃ |
| 15 | -CH₂-CH₃ | -(CH₂)₁₅-CH₃ |
| 16 | -CH-(CH₃)₂ | -(CH₂)₁₅-CH₃ |
| 17 | -H | -(CH₂)₁₇-CH₃ |
| 18 | -CH₃ | -(CH₂)₁₇CH₃ |
| 19 | -CH₂-CH₃ | -(CH₂)₁₇-CH₃ |
| 20 | -CH-(CH₃)₂ | -(CH₂)₁₇-CH₃ |
| 21 | (CH₂)₈-CH₃ | -H |
| 22 | -(CH₂)₁₀-CH₃ | -H |
| 23 | -(CH₂)₁₂-CH₃ | -H |
| 24 | -(CH₂)₁₄-CH₃ | -H |
| 25 | -(CH₂)₁₆-CH₃ | -H |
| 26 | -H | -(CH₂)₆-CH=CH-(CH₂)₇-CH₃ |
| 27 | -CH₃ | -(CH₂)₆-CH=CH-(CH₂)₇-CH₃ |
| 28 | -CH₂-CH₃ | -(CH₂)₆-CH=CH-(CH₂)₇-CH₃ |
| 29 | -CH-(CH₃)₂ | -(-CH₂)₆-CH=CH-(CH₂)₇-CH₃ |
| 30 | -(CH₂)₇-CH=CH-(CH₂)₇-CH₃ | -H |
| 31 | -(CH₂)₇-CH=CH-CH₂-CH=CH-(CH₂)₄-CH₃ | -H |
| 32 | -H | -(CH₂)₆-CH=CH-CH₂-CH=CH-(CH₂)₄-CH₃ |
| 33 | -CH₃ | -(CH₂)₆-CH=CH-CH₂-CH=CH-(CH₂)₄-CH₃ |
| 34 | -CH₂-CH₃ | -(CH₂)₆-CH=CH-CH₂-CH=CH-(CH₂)₄-CH₃ |
| 35 | -CH-(CH₃)₂ | -(CH₂)₆-CH=CH-CH₂-CH=CH-(CH₂)₄-CH₃ |
| 36 | -H | -(CH₂)₆-CH=CH-CH₂-CH=CH-CH₂-CH=CH-CH₂-CH₃ |
| 37 | -CH₃ | -(CH₂)₆-CH=CH-CH₂-CH=CH-CH₂-CH=CH-CH₂-CH₃ |
| 38 | -CH₂-CH₃ | -(CH₂)₆-CH=CH-CH₂-CH=CH-CH₂-CH=CH-CH₂-CH₃ |
| 39 | -CH-(CH₃)₂ | -(CH₂)₆-CH=CH-CH₂-CH=CH-CH₂-CH=CH-CH₂-CH₃ |
| 40 | -(CH₂)₇-CH=CH-CH₂-CH=CH-CH₂-CH=CH-CH₂-CH₃ | -H |
| 41 | -H | 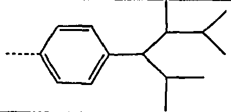 |
| 42 | -CH₃ | 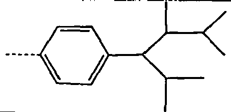 |
| 43 | -CH₂-CH₃ | 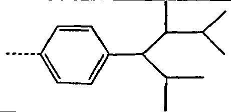 |
| 44 | -CH-(CH₃)₂ | 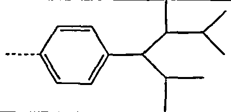 |
| 45 | 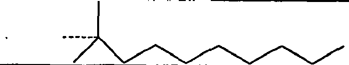 | -H |
| 46 | 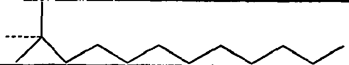 | -H |
| 47 | 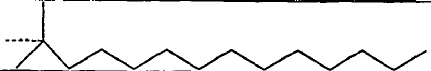 | -H |
| 48 | 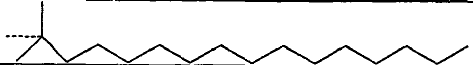 | -H |
| 49 | 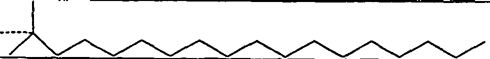 | -H |
| 50 | 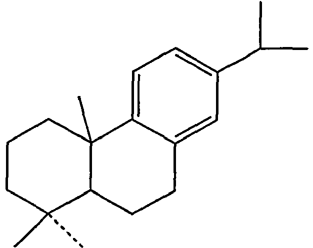 | -H |
| 51 | 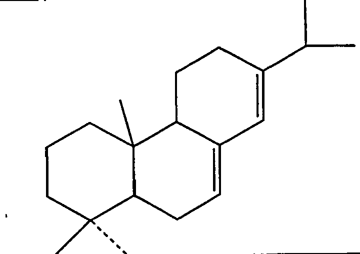 | -H |
| 52 | -H | 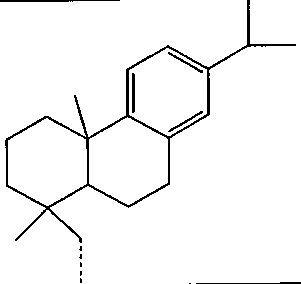 |
| 53 | -CH₃ | 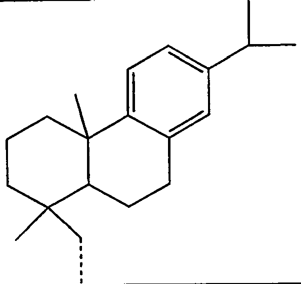 |
| 54 | -CH₂-CH₃ | 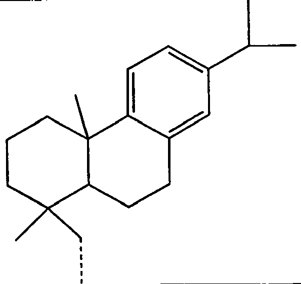 |
| 55 | -CH-(CH₃)₂ | 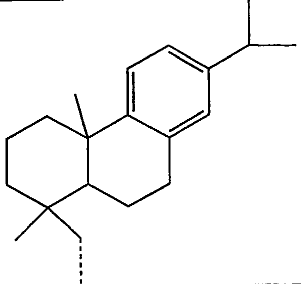 |
| 56 | -H | 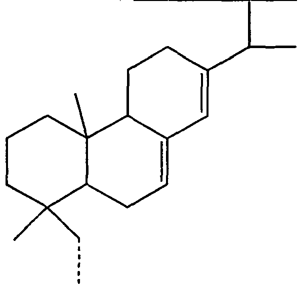 |
| 57 | -CH₃ | 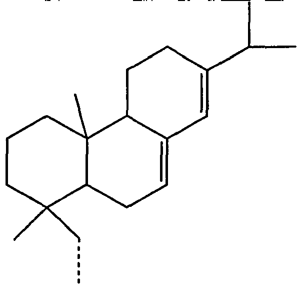 |
| 58 | -CH₂-CH₃ | 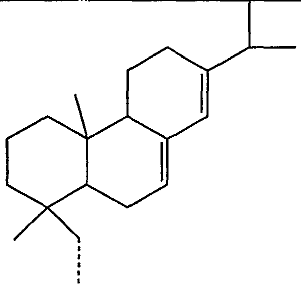 |
| 59 | -CH-(CH₃)₂ | 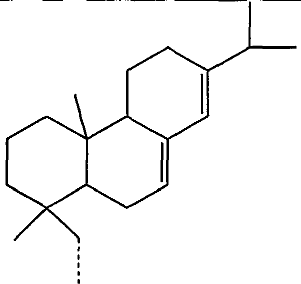 |
| 60 | -H | -((CH₂)₃-O)₄-H |
| 61 | -CH₃ | -((CH₂)₃-O)₄-H |
| 62 | -CH₂-CH₃ | -((CH₂)₃-O)₄-H |
| 63 | -CH- (CH₃)₂ | -((CH₂)₃-O)₄-H |
| 64 | -H | -(O-(CH₂)₃)₄-OH |
| 65 | -CH₃ | -(O-(CH₂)₃)₄-OH |
| 66 | -CH₂-CH₃ | -(O-(CH₂)₃)₄-OH |
| 67 | -CH-(CH₃)₂ | -(O-(CH₂)₃)₄-OH |
| 68 | -CH₂-(O-(-CH₂)₃)₃-OH | -H |
| 69 | -H | -CH₂-(O-(CH₂)₃)₄-OH |
| 70 | -CH₃ | -CH₂-(O-(CH₂)₃)₄-OH |
| 71 | -CH₂-CH₃ | -CH₂-(O-(CH₂)₃)₄-OH |
| 72 | -CH-(CH₃)₂ | -CH₂-(O-(CH₂)₃)₄-OH |
| 73 | -H | 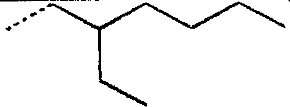 |
| 74 | -CH₃ | 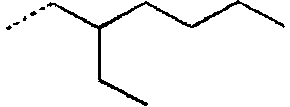 |
| 75 | -CH₂-CH₃ | 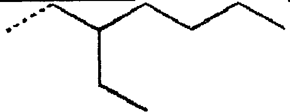 |
| 76 | -CH-(CH₃)₂ | 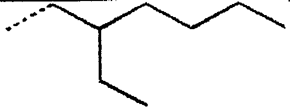 |
| 77 | -H | -(CF₂)₆-CF₃ |
| 78 | -CH₃ | -(CF₂)₆-CF₃ |
| 79 | -CH₂-CH₃ | -(CF₂)₆-CF₃ |
| 80 | -CH-(CH₃)₂ | -(CF₂)₆-CF₃ |
| 81 | 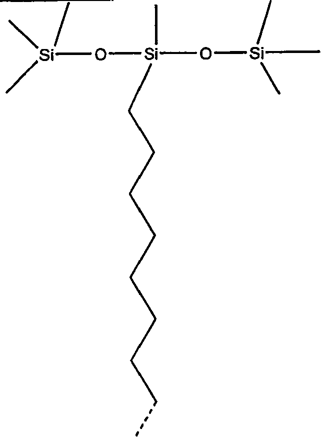 | -H |
| 82 | 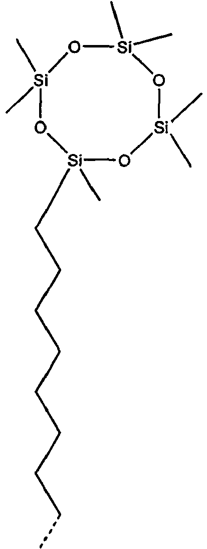 | -H |

In several of the examples given above, when R² and/or R³ constitute a hydrophobic moiety, the R¹ substituent is a small hydrocarbon substituent such as a methyl-, ethyl- or isopropyl group, or a single hydrogen. Such short hydrocarbon fragments may be formed at the β position as a result of a particular selected synthesis route, e.g. one suited for large scale industrial production. Furthermore, such small groups (e.g. isopropyl) may be attached deliberately to introduce less favourable packing in the solid state in order to reduce the Krafft temperature (see further below).

As explained above, the skilled person is able to select from the multitude of known hydrophobic groups in order to obtain the compounds for use as surfactants in accordance with the present invention. Known parameters of importance to consider when selecting hydrophobic moieties for the compounds for use as surfactant are, among others, the hydrophilic-lipophilic balance (HLB) and the Krafft temperature of the surfactant. The determination of these parameters is within the abilities of a person of skill in the art, but the two concepts are nevertheless outlined below for completeness.

The so-called hydrophilic-lipophilic balance (HLB) of a given surfactant is a well-known characteristic, tabulated for commercial surfactants and used extensively for selection of a suitable surfactant for a given application. A high HLB number means that the surfactant in question has a high affinity for the water-phase if present in a water + oil system. If an emulsion is prepared from such a system, the result is normally an oil-in-water emulsion. On the other hand, if the HLB number is low, the surfactant has a high affinity for the oil phase, and water-in-oil emulsions are normally formed. The HLB number of a surfactant is influenced by the chemical structure of both hydrophilic and hydrophobic groups of the surfactant. Within the surfactant class of the present invention, the HLB parameter can be varied mainly through selection of hydrophobic group. As an example, among surfactants 1-17 in the above listing, those having a shorter carbon chain as hydrophobic group(s) (e.g. compounds 5-8) will have a higher HLB number (will have a higher affinity for water) than those having longer carbon chains (e.g. compounds 17-20).

The Krafft temperature is the temperature at which the solubility in water increases very dramatically. For a given application using the surfactant according to the invention, it is important consider the Krafft temperature of the surfactant, so as to assure dissolution of the surfactant at the temperature in question. A well-known way of decreasing the Krafft temperature of a surfactant is the use of one or several double bonds in the hydrophobic group(s), creating a bent carbon chain which in turn renders packing conditions in the solid state less favorable. As examples, surfactants 26-40 in the above listing should have a lower Krafft temperature than the corresponding compounds without the double bond. Another well-known way of lowering the Krafft temperature of a surfactant is to introduce branching in the hydrophobic group. Surfactants 45-49 and 73-76 in the above listing are examples of surfactants with such branched hydrophobic groups.

The compound of the present invention acts as an anionic surfactant (i.e. in its salt form) at pH ≥ pKₐ. The pKₐ of compounds of the present invention may vary widely, e.g. as a result of the choice of hydrophobic moieties. Additionally, substitution on the α-carbon of the β-keto acid group with e.g. electron-withdrawing groups, such as -NO₂, CCl₃, -CN, -COOH or CH₃CO-, may lower the pKₐ.

The skilled man is able to choose suitable temperatures (e.g. in the range from 0 to 100 °C) for employing the compound of the present invention.

The surfactant of the present invention may be a dispersing agent.

The objects of the present invention are also accomplished by a dispersion comprising solid particles, liquid droplets or gas bubbles dispersed, as an internal phase, in a fluid, as an external phase, by means of a surfactant, as a dispersing agent, wherein said surfactant is a compound as defined above.

Said surfactant may be active in any kind of dispersion, the preparation of which can be accomplished according to procedures well known to the skilled man (such as agitation, shearing or spraying). As is also well known to the skilled man, a dispersion may be an aerosol, a colloid, an emulsion, a foam, a gel, a sol or a suspension. The external phase of such a dispersion may be an aqueous phase as well as an oil phase or air. The skilled man is able to routinely examine the decomposition rate, as manifested by delayed dispersion breaking and/or the breaking rate, at different temperatures in such a dispersion (cf. Example 3 below). Accordingly, the skilled man is able to choose suitable temperatures (e.g. in the range from 0 to 100 °C) for employing the dispersion. The rate of decomposition can be effectively controlled by temperature at substantially constant pH conditions. Its rate of decomposition is generally increasing with increasing temperature. The rate of decomposition is substantially independent of pH as long as pH > p*Kₐ*.

Furthermore, the objects of the present invention are attained by the provision of a method for reducing the surface tension between a liquid and another phase, comprising adding to said liquid, as a surfactant, a compound having a hydrophobic moiety attached to a hydrophilic moiety, wherein the hydrophilic moiety comprises a β-keto acid group and the hydrophobic moiety is attached via a bond from a carbon or an oxygen of the hydrophobic moiety to a carbon of the β-keto acid group, provided that the β-carbon of the β-keto acid group does not form part of a carboxyl or ester group, or a salt thereof. Particular variants and options for the surfactant used in the inventive method for reducing surface tension are as discussed above.

Further, the objects of the present invention are accomplished by a method for breaking a dispersion comprising solid particles, liquid droplets or gas bubbles dispersed, as an internal phase, in a fluid, as an external phase, by means of a surfactant as a dispersing agent, wherein said surfactant is a compound as defined above, said method comprising the steps of
a) providing said dispersion at a temperature where it is substantially stable; and
b) setting the temperature of said dispersion, so as to achieve a desired decomposition rate of the surfactant.

As described above, the surfactant of the invention is susceptible to an increased rate of decomposition and inactivation by increasing temperature. This property allows for controlled breaking of a dispersion at a desirable moment and/or at a desirable rate. Hence, in any suitable application, the properties of an initially dispersed composition may be changed as desirable.

The skilled man is able to routinely examine the required temperature for a desired decomposition rate. The temperature is dependent on the surfactant, the external phase and the internal phase components, as well as on pH (see above).

The dispersion is preferably provided at a temperature in the range from about 0 to about 40 °C, preferably from about 10 to about 30 °C, at which the dispersion is virtually stable (i.e. stable for e.g. hours or days).

By raising the temperature to a range from about 40 to about 100 °C, preferably from about 60 to about 95 °C, the dispersion is broken faster due to increased rate of decomposition and deactivation of the surfactant (i.e. decomposition within e.g. minutes or hours). The rate of decomposition, as manifested by delayed dispersion breaking and/or the breaking rate, can thus be effectively controlled by temperature at substantially constant pH conditions. The rate of decomposition generally increases with increasing temperature and is substantially independent of pH as long as pH > pKₐ.

The dispersion may be provided by
i) providing a surfactant precursor, wherein the surfactant precursor is an ester or amide, preferably an ester, of a compound as defined above;
ii) activating said surfactant precursor to a surfactant, wherein the surfactant is a compound as defined above; and
iii) dispersing a mixture of said internal phase, said external phase and said surfactant.

Such provision allows for the surfactant to be stored as its thermostable precursor and be activated shortly before use.

The dispersion may also be provided by
i) providing a mixture of said internal phase, said external phase and a surfactant precursor, wherein the surfactant precursor is an ester or amide, preferably an ester, of a compound as defined above;
ii) activating said surfactant precursor to a surfactant, wherein the surfactant is a compound as defined above; and
iii) dispersing said mixture.

Such provision allows for the surface action in a composition comprising the surfactant precursor to be switched on at a desirable occasion, thereby changing the properties of the composition.

Thus, a further aspect of the present invention consists in the use of an ester of the inventive surfactant as a surfactant precursor. Thus, a compound for use as a surfactant precursor has the general formula II: 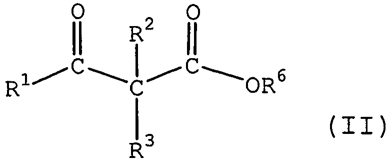 wherein R¹, R² and R³ are as defined for formula I, and R⁶ is any suitable substituent. In the general sense, the identity of R⁶ is not critical, and may be selected by the skilled person without undue experimentation, with a view to provide suitable characteristics, for example in the context of synthesis of the compound or intended application thereof. The ester may for example be selected from a C₁-C₆ straight or branched alkyl ester, such as an ethyl ester or a tert-butyl ester; a benzyl ester; a β,β,β-trichloroethyl ester; or a monoglyceride (glycerol ester).

Another, related, aspect of the present invention consists in the use of an amide of the inventive surfactant as a surfactant precursor. Thus, a compound for use as a surfactant precursor has the general formula III: 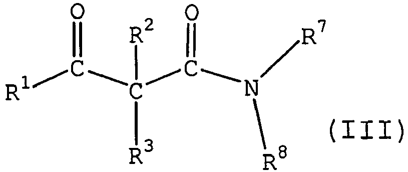 wherein R¹, R² and R³ are as defined for formula I, and each of R⁷ and R⁸ independently is any suitable substituent. As discussed for R⁶ in the case of the ester precursor of formula II, the identities of R⁷ and R⁸ are not critical, and may be selected by the skilled person without undue experimentation, with a view to provide suitable characteristics, for example in the context of synthesis of the compound or intended application thereof.

A typical characteristic of a surfactant precursor according to the invention is that it does not degrade or decompose rapidly, even if temperature is raised. Thus, the surfactant of the present invention can be stored in the form of a thermally stabile surfactant precursor, which can quickly be activated to the surfactant of the present invention on-site or just before use. The precursor may be activated (i.e. transformed to the surfactant of the present invention) by saponification or hydrolysis, optionally followed by an adjustment of pH. The concepts of saponification and hydrolysis are well known to the skilled man.

An additional aspect of the present invention is a microemulsion comprising, as surfactant, a compound as defined above with reference to formula I. As is known to the person of skill in the art, a microemulsion is a macroscopically homogeneous mixture of oil, water and surfactant, which on the microscopic level consists of individual domains of oil and water, separated by a monolayer of the surfactant amphiphile. See e.g. Jönsson B et al., "Surfactants and Polymers in Aqueous Solution", John Wiley & Sons Ltd (1998), chapter 18. In analogy to what is explained above, the properties of the compound enables controlled breaking of the microemulsion. The detailed description above regarding the behaviour of a dispersion comprising the compound as surfactant is equally applicable to the inventive microemulsion, for example in terms of methods for breaking the microemulsion.

The present invention also encompasses several methods and applications, in which the beneficial advantages of the surfactant properties of the compounds described above are exploited. In the following discussion of such methods and applications, the person of skill in the art can determine which particular compound of the class described herein should be used and in what proportions, taking into account for example the properties of HLB and Krafft temperature discussed above, as well as the particular chemical nature of the hydrophobic groups. Particular recipes and formulations for some of these applications are given in Examples 10-18 below.

One application aspect of the present invention relates to use of a compound as described above as a surfactant in a lubrication composition. In this context, a surfactant according to the invention is used to form an oil-in-water emulsion of an oily component. Optionally, an extreme pressure (EP) additive and/or a corrosion inhibitor is/are added, in order to enhance performance at high pressures and corrosion resistant properties, respectively. The emulsion may then be used as lubricant. The beneficial properties of the surfactant will enable breaking of the emulsion at a certain elevated temperature, following which the different components are easily separable. This provides for re-use or destruction of the oily phase.

Another application aspect of the present invention relates to use of a compound as described above as a surfactant in a degreasing composition. To prepare such a degreasing composition, a surfactant precursor as described herein is suitably mixed with a hydrotrope, such as commercially available Ampholac YJH40, a complexing agent, such as Na₃NTA or tripolyphosphate, and an alkaline salt for use as corrosion inhibitor and anti-redeposition agent, such as Na-metasilicate in an aqueous solution. Optionally, an auxiliary surface active compound, such as Berol 266 (Akzo Nobel), is also added. Vigorous stirring of the mixture and alkalinity provides for saponification conditions, under which the surfactant precursor is activated. Following this, white spirit is dissolved or emulsified into the mixture in an amount less than that causing separation of phases. The result is a formulation suitable for use as a degreasing formulation, e.g. in automatic car washing equipment. As in other applications of the inventive concept, the surfactant degrades over time or with raised temperature, which facilitates the separation and further processing of the different components of the formulation after use.

Yet another application aspect of the present invention relates to use of a compound as described above as a surfactant in a cleaning solution, which has a simpler composition than that described immediately above. A precursor of a surfactant as described herein may be admixed in suitable proportions with an alkaline component, for example solid potassium hydroxide dissolved in ethanol. The result, after saponification, is an ethanolic concentrate of an activated surfactant according to the invention. The concentrate may then be diluted at the user's discretion, and used for cleaning/degreasing in household and industrial settings.

A further application aspect of the present invention relates to use of a compound as described above as a surfactant in an alkaline detergent composition, which is useful for example in automatic dishwashing equipment. In preparing such a composition, an aqueous, strongly alkaline (typically pH 11-14) pre-mixture is made of a complexing agent, such as Na₃NTA or tripolyphosphate, and an alkaline salt for use as corrosion inhibitor and anti-redeposition agent, such as Na-metasilicate. Optionally, an auxiliary surface active compound, such as Berol 266 (Akzo Nobel), is also added. To this strongly alkaline pre-mixture, a surfactant precursor as described herein is added under vigorous stirring, creating an emulsion which may be used in dishwashing equipment. During the initial period of use, the surfactant precursor will be activated. With a careful choice of surfactant and proportions of the composition components, the activated surfactant will be degraded during the course of a typical washing program, so that only small amounts, if any, of the intact composition will remain at the end of the program.

Yet a further application aspect of the present invention concerns use of a compound as described above as a surfactant in a laundry detergent composition. One example of such a detergent formulation is provided in Example 14. Components of this formulation may be exchanged by the skilled person to provide alternative compositions, taking into account the functional significance of each component. A laundry detergent comprising a surfactant in accordance with the present invention, i.e. a thermolabile (soap-like) surfactant instead of an ordinary soap, may display an enhanced stain removal efficiency due to the fact that the surfactant affinity difference (SAD) / critical packing parameter (CPP) / spontaneus curvature of the surfactant layer between the soil and the aqueous phase will change during the wash cycle as the surfactant breaks down. It is well known that there is an optimal SAD/CPP for optimal removal of each type of oily soil. Using a dynamic detergent as described herein, several different stains can be optimally removed during the same wash cycle, at a constant washing temperature. That this effect can be obtained with a surfactant that breaks down to environmentally friendly products is naturally an additional benefit.

Yet a further application aspect of the present invention concerns use of a compound as described above as a surfactant in an emulsion of an active substance intended to be applied to agricultural crops. In this context, such an active substance, which for example may be a pesticide, a weed-control agent or other compound intended for protection of the crops, is admixed with activated surfactant and for example propylene glycol to prepare a concentrated stock. The active substance may be provided in any liquid or solid form. When used in the field, the concentrated stock is suitably diluted and used for crop protection. Again, the inventive surfactant is beneficial, in that its degradation products are not harmful to the environment with a suitable choice of hydrophobic groups.

Another application aspect of the present invention concerns use of a compound as described above as a surfactant in an alkyd emulsion for paint formulations. One example of such a formulation is provided in Example 16. Components of this formulation may be exchanged by the skilled person to provide alternative compositions, taking into account the functional significance of each component. The obtained alkyd emulsion can be used in the formulation of e.g. high gloss paints for outdoor use. Alkyd emulsions stabilised by a decomposable surfactant according to the invention may allow formulation of paints with enhanced water resistance, due to the transformation of the water soluble surfactant (after application of paint) into an oil-like hydrophobic residue. The hydrophobic nature of the decomposition product may also render the painted surface more water repellent/hydrophobic.

Yet another application aspect of the present invention concerns use of a compound as described above as a surfactant in an ink composition. One example of such an ink composition is provided in Example 17. Components of this formulation may be exchanged by the skilled person to provide alternative compositions, taking into account the functional significance of each component. The obtained ink is useful for printing, e.g. in a flexographic printing process. After printing, the surfactant will break down to harmless non-surfactant products with time or through application of heat. Apart from the obvious environmental benefit, adhesion of any subsequent coatings on top of the printed area may be enhanced due to the breakdown of the surfactant. Furthermore, the dried ink may exhibit a better resistance towards water or waterborne chemicals, as the decomposition product (2-pentadecanone in this case) has a much lower solubility in water, compared to the surfactant.

Yet another application aspect of the present invention concerns use of a compound as described above as a surfactant in a coating composition. One example of such a coating composition is provided in Example 18. Components of this formulation may be exchanged by the skilled person to provide alternative compositions, taking into account the functional significance of each component. The coating formulation obtained may be used for paper/board coating. The decomposition of the surfactant in the formulation (in the drying step right after application of the coating, later upon storage or by heat treatment for the explicit purpose of surfactant decomposition) may provide benefits such as better printing properties, better adhesion (e.g. towards a polyethylene coating applied in a subsequent step) and enhanced friction properties. In addition, the non-toxicity of the surfactant degradation products (suitable hydrophobic groups and carbonate/hydrogen carbonate) is beneficial for paper and/or board intended to be in contact with foodstuffs.

As used herein, the term "β-keto acid group" means a carboxylic acid group having a carbonyl group one carbon removed from the carboxylic acid group, i.e. a group according to formula I. 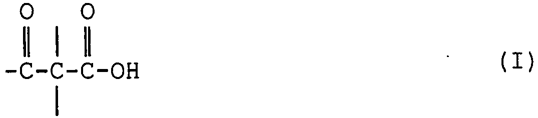 The "α-carbon" of a β-keto acid group is the carbon next to the carboxylic acid group. The "β-carbon" of a β-keto acid group is the carbon one carbon removed from the carboxylic acid group. See formula II.

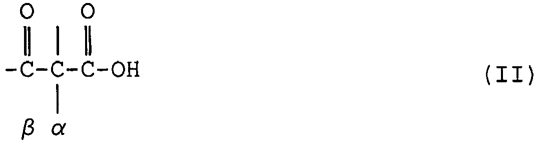

As used herein, the term "carboxyl group" means a group according to formula III. 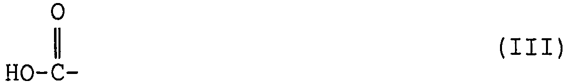 If the β-carbon of the β-keto acid group forms part of such a carboxyl group, the compound of the present invention will not lose its surface activity upon decomposition.

As used herein, the term "ester group" means a group according to formula IV.

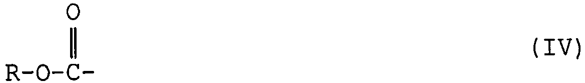

If the β-carbon of the β-keto acid group forms part of such an ester group, the compound of the present invention may, before or after decomposition, be hydrolysed into a further surface active compound.

### Examples

### Example 1. Synthesis of a surfactant precursor

Sodium metal (1.8 g, 0.075 mol) was added in small portions to a two-necked vessel containing abs. ethanol (30 mL) with continuous stirring under N₂ until all Na was dissolved. Then, ethyl acetoacetate (14,7 mL, 0.115 mol) and 1-iodododecane (18.7 mL, 0.076 mol) were added to the vessel and the resultant mixture was refluxed for 3.5 h and then poured onto water and extracted with diethyl ether. The obtained extract was dried over MgSO₄ and concentrated in vacuum. The residue was purified with vacuum distillation (0.1 bar, fraction collected at 135-140 °C), giving a clear oil.

The obtained oil was characterised by nuclear magnetic resonance (¹H NMR) and found to consist of approximately 98.5 % pure ethyl α-dodecylacetoacetate. ¹H NMR peaks were obtained at the following shifts (ppm): 0.90, 1.35, (1.65 and 1.67), 1.85, (2.05), 2.25, 3.42, 4.22. In addition, the typical peaks from chloroform and dichloromethane were obtained, originating from the solvent used. Peaks within parenthesis were small unidentified peaks from impurities.

### Example 2a. Activation of the surfactant precursor through saponifiaction

100 mg of the surfactant precursor from Example 1 was mixed with 700 µL of 0.5 M KOH dissolved in ethanol and the mixture was left standing with continuous stirring for one hour. The mixture was then poured into 10 mL of deionised water. The resulting product (compound 2 of Table 1) was shown to exhibit a behaviour typical for concentrated solutions of water-soluble surfactants of the soap-type, i.e. it gave heavily foaming turbid aqueous solutions and allowed the formation of very stabile oil-in-water emulsions. The fact that the formed emulsions were indeed oil-in-water emulsions (and not water-in-oil emulsions) was proven according to Example 2c.

### Example 2b. Activation of the surfactant precursor through saponifiaction

Precursor activation was performed according to Example 2a. However, to obtain a more pure active surfactant the precursor was extracted several times with deionised water prior to saponification. Additionally, the saponification time was increased to three hours.

### Example 2c. Test of type of emulsion obtained

Equal amounts of hexadecane (oil, coloured red for visibility by a small amount of oil soluble pigment) and water containing 0.85 % of the surfactant (activated precursor) from Example 2a was exposed to vigorous shearing by a so-called Ultraturrax mixer equipment. Upon dropping of a drop of the obtained emulsion into pure hexadecane, the droplet was seen to fall to the bottom of the beaker unaffected. Another droplet of the obtained emulsion was dropped into water, and the emulsion droplet was then seen to spontaneously disperse in the water, which proves that the emulsion was of the oil-in water type (the continuous medium of the emulsion being water, not oil).

### Example 2d. Test of hydrophilic/hydrophobic character of the precursor

The precursor ester from Example 1 was added as one drop to a sample of deionised water. The precursor exhibited an oil-like (hydrophobic) behaviour as expected from its chemical structure.

### Example 3. Formation of oil-in-water emulsions with delayed breaking and temperature-controlled rate of breaking

Samples taken from an emulsion prepared as described in Example 2c, withdrawn from the emulsion during continuous stirring by a magnetic stirrer, were subjected to isothermal heat-treatment at temperatures from room temperature up to 95 °C and documented photographically as a function of time. The percentage of oil separated at a given time was measured from obtained photos and is shown in Table 2.

**Table 2. Separated oil (%)**

| Time (min) | Room temperature | 40 °C | 50 °C | 60 °C | 70 °C | 95 °C |
|---|---|---|---|---|---|---|
| 5 | 0.0 | 0.0 | 0.0 | 0.0 | 0.0 | 0.0 |
| 10 | 0.0 | 0.0 | 0.0 | 0.0 | 0.0 | 0.0 |
| 20 | 0.0 | 0.0 | 0.0 | 0.0 | 0.0 | 2.9 |
| 25 | 0.0 | 0.0 | 0.0 | 0.0 | 0.0 | 6.7 |
| 30 | 0.0 | 0.0 | 0.0 | 0.0 | 0.0 | 8.6 |
| 40 | 0.0 | 0.0 | 0.0 | 0.0 | 0.0 | 11.4 |
| 50 | 0.0 | 0.0 | 0.0 | 0.0 | 0.0 | 11.7 |
| 65 | 0.0 | 0.0 | 0.0 | 0.0 | 0.0 | 19.2 |
| 80 | 0.0 | 0.0 | 0.0 | 0.0 | 6.7 | 24.0 |
| 95 | 0.0 | 0.0 | 0.0 | 2.9 | 13.3 | 29.7 |
| 115 | 0.0 | 0.0 | 0.0 | 3.8 | 19.0 | 31.7 |
| 135 | 0.0 | 0.0 | 0.0 | 3.8 | 26.7 | 36.5 |
| 180 | 0.0 | 0.0 | 0.0 | 5.7 | 40.0 | 47.3 |
| 215 | 0.0 | 0.0 | 0.0 | 11.4 | 43.8 | 49.0 |
| 250 | 0.0 | 0.0 | 0.0 | 20.0 | 51.4 | 58.8 |
| 310 | 0.0 | 0.0 | 2.0 | 28.6 | 58.1 | 59.2 |
| 370 | 0.0 | 0.0 | 10.0 | 40.0 | 66.7 | 69.3 |
| 430 | 0.0 | 0.0 | 19.2 | 46.7 | 65.7 | 75.1 |
| 440 | 0.0 | 0.0 | 50.0 | 62.4 | 67.3 | 80.4 |
| 475 | 0.0 | 3.0 | 54.7 | 68.6 | 76.5 | 82.2 |
| 510 | 0.0 | 4.0 | 56.0 | 68.3 | 77.7 | 83.3 |
| 545 | 0.0 | 5.1 | 55.0 | 69.3 | 82.9 | 84.2 |
| 630 | 0.0 | 7.1 | 60.0 | 78.8 | 87.0 | 89.1 |
| 710 | 0.0 | 5.1 | 60.0 | 79.6 | 86.5 | 88.2 |
| 840 | 0.0 | 8.8 | 69.3 | 83.9 | 85.7 | 89.2 |
| 870 | 0.0 | 33.7 | 78.4 | 87.0 | 87.4 | 88.8 |
| 1045 | 0.0 | 31.7 | 79.2 | 86.1 | 85.7 | 92.1 |
| 1175 | 0.0 | 40.0 | 79.6 | 88.2 | 85.7 | 90.5 |

As can be seen in Table 2, a delay-time before initiation of emulsion-breaking was observed. This delay-time was found to be clearly controllable by temperature, e.g. the delay-time was short at high temperatures and substantially longer at lower temperatures. In addition, the rate of emulsion-breaking (after it had started) was lower at low temperatures than at high temperatures.

Note that the absolute delay-times and emulsion breaking rates will likely depend heavily on the emulsification protocol and history of the individual samples. The general relative trends, with higher rates and shorter delay-times at high temperatures as compared to low temperatures, will however still be valid for a given individual emulsion sample.

### Example 4. Verification of decay of surface activity via monitoring of a decay in foaminess

Samples containing 0.85 % of surfactant, prepared as in Example 2a above, were heat-treated at a series of different temperatures in water baths and the initial foam-height obtained upon direct shaking of the hot samples was recorded as a function of time. As can be seen from Table 3, the foaminess of the samples decayed with time, and did so significantly quicker at higher temperatures. This shows, again, that the surfactants of the present invention allow for control of the rate of decay of surface activity within a wide range.

**Table 3. Foam height (cm)**

| Time (min) | Room temperature | 40 °C | 50 °C | 60 °C | 70 °C | 95 °C |
|---|---|---|---|---|---|---|
| 5 | 6.05 | 5.7 | 5.55 | 5.3 | 5.25 | 4.35 |
| 10 | 5.9 | 5.75 | 5.4 | 5.25 | 5.4 | 1.6 |
| 20 | 5.95 | 6.05 | 5.85 | 5.4 | 5.4 | 1.05 |
| 25 | 6.1 | 6.15 | 5.75 | 5.7 | 5.25 | 0.85 |
| 45 | 5.9 | 5.85 | 6.1 | 5.75 | 4.7 | 0.85 |
| 60 | 5.8 | 6.05 | 6.05 | 5.45 | 4.85 | 0.9 |
| 80 | 5.8 | 5.55 | 5.7 | 4.95 | 4.05 | 0.8 |
| 100 | 5.85 | 5.5 | 5.6 | 5.1 | 2.8 | 0.85 |
| 115 | 6.1 | 5.7 | 5.8 | 5 | 2.7 | 0.8 |
| 135 | 5.95 | 5.85 | 5.5 | 4.6 | 1.7 | 0.85 |
| 180 | 5.7 | 5.85 | 5.8 | 4.75 | 1.55 | 0.75 |
| 215 | 5.65 | 5.85 | 4.65 | 4.5 | 1 | 0.75 |
| 255 | 5.55 | 5.7 | 4.7 | 3.65 | 0.85 | 0.8 |
| 315 | 5.6 | 5.85 | 4.85 | 3.7 | 0.9 | 0.8 |
| 375 | 5.75 | 5.65 | 3.5 | 3.4 | 0.7 | 0.8 |
| 425 | 5.6 | 5.75 | 3.5 | 2.55 | 0.7 | 0.85 |
| 440 | 5.7 | 5.35 | 2.25 | 1.85 | 0.7 | 0.8 |
| 470 | 5.7 | 5.45 | 2.3 | 1.8 | 0.75 | 0.8 |
| 505 | 5.55 | 5.35 | 2.65 | 1.45 | 0.75 | 0.9 |
| 625 | 5.55 | 4.4 | 2.35 | 1.15 | 0.75 | 0.9 |
| 705 | 5.6 | 3.8 | 2.35 | 1.15 | 0.8 | 0.9 |
| 835 | 5.55 | 3.75 | 1.65 | 1.35 | 0.8 | 0.9 |
| 870 | 4.15 | 2.75 | 0.65 | 0.7 | 0.65 | 0.9 |
| 1100 | 4.1 | 2.55 | 0.75 | 0.9 | 0.75 | 0.9 |
| 1230 | 4.25 | 1.85 | 1 | 0.85 | 0.38 | 0.9 |

### Example 5. Verification of the obtained degradation product

A sample consisting of 0.85 % aqueous solutions of the surfactant (see above-mentioned Examples) was treated for 31 hours at 95 °C and thereafter stored in a refrigerator. The sample was then cooled on an ice bath and centrifuged. A crystalline phase was thereby obtained floating on top of the centrifuged liquid. The crystals were removed from the liquid and washed once with water through vigorous shaking followed by centrifugation and separation. The obtained crystals were dissolved in deuterated acetone and characterised by ¹H NMR. The results confirmed that pentadecanone had been formed, which verifies the expected decomposition mechanism of the surfactant (the activated/saponified surfactant precursor). Pentadecanone is non-toxic and allowed in food applications.

### Example 6. pH interval of foaming

An aqueous solution sample of surfactant (activated precursor according to Example 2b) was pH adjusted with HCl, so as to detect the lower pH limit for foaming (assumed to coincide with the p*Kₐ* of the surfactant). It was found that solutions foamed well down to, and including pH 6 but that a sample of pH 5 did not foam. This demonstrates the soap/fatty acid like character of the active decomposable surfactant of this invention and also shows that the typical pH interval of usefulness in aqueous media can be e.g. from 6 to 14 (see below).

### Example 7. pH dependence of the delay of emulsion breaking

Several emulsions of hexadecane in an aqueous solution containing 0.085 % surfactant (activated precursor according to Example 2b) were prepared using an Ultraturrax equipment as above. Thereafter, the pH of the emulsion samples was adjusted to 14, 12, 10, 8 and 6 with 1 M HCl or 1 M NaOH. The samples were then treated at 95 and 70 °C and the percentage of oil separated was monitored as a function of time. Table 4 shows the results obtained at 95 and 70 °C. As can be seen from the table, delayed emulsion breaking was clearly obtained for all samples with a pH higher than or equal to 10. The delay time was not dependent on pH in this interval (pH ≥ p*Kₐ*), which is to be expected from acetoacetate decomposition (Widmark, Acta med. Scand. 53:393-421 (1920-21)).

For the samples with pH 8, some oil had separated already before the heat-treatment. However, the sample treated at 70 °C still displayed a delayed onset of further breaking when heated. The initial non-emulsified oil in this sample was probably due to poor emulsification, as later tests gave emulsions with stability at room temperature.

As can be seen from the table, both samples at pH 6 clearly began separating without any delay. This is in accordance with the typical kinetics of acetoacetate decomposition (Widmark, *supra*) as the rate of decomposition is expected to increase as pH comes close to, or below the p*Kₐ* of the surfactant.

### Example 8. pH dependence of the delay of emulsion breaking

Emulsified samples (pH 8, 10 and 14) were treated at room temperature and at 7 °C. All emulsions apart from the sample with pH 8, which was stored at room temperature, were stable for more than 19 hours. For the sample with pH 8, stored at room temperature, a weak initiation of oil separation in the form of small oil droplets forming at the top of the test tube was detected at a time 19 hours after the emulsion was prepared.

**Table 4. Separated oil (%)**

| Time (min) | pH 6 70 °C | pH 6 95 °C | pH 8 70 °C | pH 8 95 °C | pH 10 70 °C | pH 10 95 °C | pH 12 70 °C | pH 12 95 OC | pH 14 70 °C | pH 14 95 °C |
|---|---|---|---|---|---|---|---|---|---|---|
| 0 | 16 | 12 | 15 | 14 | 0 | 0 | 0 | 0 | 0 | 0 |
| 10 | 29 | 34 | 13 | 20 | 0 | 0 | 0 | 0 | 0 | 0 |
| 20 | 34 | 47 | 13 | 35 | 0 | 0 | 0 | 0 | 0 | 13 |
| 35 | 67 | 67 | 15 | 67 | 0 | 29 | 0 | 19 | 0 | 40 |
| 55 | 79 | 70 | 16 | 82 | 0 | 43 | 0 | 28 | 0 | 43 |
| 75 | 85 | 72 | 54 | 91 | 8 | 57 | 23 | 42 | 27 | 65 |
| 95 | 87 | 81 | 73 | 92 | 28 | 69 | 48 | 56 | 45 | 80 |
| 120 | 87 | 79 | 93 | 95 | 53 | 70 | 69 | 67 | 65 | 92 |
| 150 | 95 | 67 | 93 | 97 | 68 | 76 | 81 | 70 | 67 | 92 |
| 255 | 89 | 85 | 100 | 96 | 92 | 80 | 93 | 81 | 92 | 92 |

### Example 9a. Activation of surfactant precursor in aqueous medium

50 µl of a surfactant precursor prepared as in Example 1 was introduced into 1.5 ml of an aqueous solution of 28.4 g/l NaOH. Upon immediate shaking of the test tube containing the above mixture, an unstable emulsion was formed. The mixture was then vigorously emulsified using a vortex mixer. Initially, no foam was produced in the mixture after shaking of the test tube. The sample was stored at room temperature and periodically re-emulsified as above. After 8 hours, foaming was observed after shaking, indicating that the saponification needed for activation of the precursor into the thermolabile surfactant had taken place. The foaming behaviour was still present after three days of storage at room temperature.

### Example 9b. Activation of surfactant precursor in aqueous medium using an auxiliary surfactant

50 µl of a surfactant precursor prepared as in Example 1 was introduced into a mixture of 1.5 ml of an aqueous NaOH solution (28.4 g/l) and 60 µl of an aqueous solution of the surfactant Berol 266 (12.2 g/l) obtained from Akzo Nobel. Upon immediate shaking of the test tube containing the above mixture, an emulsion with a higher stability (as determined by inspection) than in Example 9a was formed. The solution was vigorously emulsified using a vortex mixer. Initially, no foam was produced in the mixture after shaking of the test tube. The sample was stored at room temperature and periodically re-emulsified as above. After 8 hours, foaming was observed after shaking, indicating that the saponification needed for activation of the precursor into the thermolabile surfactant had taken place. The foaming behaviour was still present after three days of storage at room temperature.

### Example 10. Oil-in-water emulsion for lubrication

The following ingredients are mixed in the proportions given:

| Component | Parts by weight |
|---|---|
| Activated surfactant of Example 2a | 100 |
| Water | 2200 |
| Trimethyl propane ester of oleic acid | 23 |
| Extreme pressure additive | 2 |
| Corrosion inhibitor | 0.3 |

20-25 cm³ of a mixture according to the above recipe is emulsified vigorously using e.g. an Ultrathurrax mixer for 1 min at room temperature. The obtained emulsion will be useful for example as a lubricating emulsion in metalworking applications. Upon heating, the emulsion will break, which facilitates separation of the oil phase and its subsequent destruction or re-use.

### Example 11a. Degreasing formulation

The following ingredients are mixed in the proportions given:

| Component | Parts by weight |
|---|---|
| Surfactant precursor of Example 1 | 10 |
| Berol 266 (Akzo Nobel) | 0-0.05 |
| Ampholac YJH40 (Akzo Nobel) | 6 |
| NaOH | 2 |
| Na₃NTA or tripolyphosphate (complexing agent) | 1 |
| Na-metasilicate · (H₂O)₅ | 1 |
| Deionised water | 70 |

The salts are dissolved in the water and Ampholac and Berol 266 are added. Surfactant precursor is added with vigorous stirring, and stirring is maintained for approximately 3 h at a given temperature. Any differences in foaming / turbidity/ remaining non-emulsified precursor are monitored and noted, in order to follow the activation (saponification) of the precursor.

At a desired point in time, a sample of the above mixture is taken, and the amount of white spirit that can be dissolved or emulsified into the mixture without apparent separation is determined. If an emulsion is obtained and desired, vigorous shearing is used during the emulsification, e g using an Ultrathurrax mixer. The amount of white spirit that can be dissolved/emulsified may depend on the chemical composition of the white spirit, and on the degree of activation/saponification of the precursor at the given time and temperature. When a suitable amount of white spirit may be dissolved or emulsified into the mixture without apparent separation, white spirit is added to the remaining liquid mixture in an amount of up to 80 % of the determined maximum level.

The obtained formulation may be useful as a degreasing formulation, e.g. for car wash applications or in industrial degreasing. Its benefit, in comparison with conventional degreasing formulations, will be that the main surfactant in the formulation will degrade over time, e.g. in the tank of recirculating water in a car wash plant, so as to aid separation of oil (here white spirit) from such tanks. The separation may be accelerated, e.g. by increasing the temperature of the tank or by the addition of additives that accelerate the surfactant breakdown.

### Example 11b. Degreasing formulation

10 parts (by weight) of surfactant precursor prepared as in Example 1 are added to 58 parts of 0.5 M ethanolic solution of KOH (99.7 vol % ethanol and KOH), in order to activate the surfactant precursor. The activation of the surfactant precursor is allowed to proceed for 4 h, and then the obtained product is poured into an open beaker allowing the ethanol to evaporate at room temperature, optionally using gentle blowing with dry air over the sample to speed up evaporation. When no more ethanol can be evaporated, the obtained activated surfactant residue is mixed with the following:

| Component | Parts by weight |
|---|---|
| Berol 266 (Akzo Nobel) | 0-0.05 |
| Ampholac YJH40 (Akzo Nobel) | 6 |
| NaOH | 2 |
| Na₃NTA or tripolyphosphate (complexing agent) | 1 |
| Na-metasilicate (H₂O)₅ | 1 |
| Deionised water | 70 |

A sample of the above mixture is taken, and the amount of white spirit that can be dissolved or emulsified into the mixture without apparent separation is determined. If an emulsion is obtained and desired, vigorous shearing is used during the emulsification, e g using an Ultrathurrax mixer. The amount of white spirit that can be dissolved/emulsified may depend on the chemical composition of the white spirit, and on the degree of activation/saponification of the precursor at the given time and temperature. When a suitable amount of white spirit may be dissolved or emulsified into the mixture without apparent separation, white spirit is added to the remaining liquid mixture in an amount of up to 80 % of the determined maximum level.

Similar to the formulation of Example 11a, the obtained formulation is useful as a degreasing formulation, e.g. for car wash applications or in industrial degreasing. Benefits of this formulation are similar to those described in Example 11a.

### Example 12. Cleaning and degreasing solution

10 g of surfactant precursor obtained as in Example 1 is mixed with 70 g 0.5 M KOH dissolved in ethanol. The mixture is left standing with continuous stirring for 1 h. The resulting mixture is a concentrate of a thermolabile surfactant of the present invention in ethanol. The obtained concentrate may be diluted to any desired concentration and used as a soap solution for cleaning and degreasing. For household cleaning and degreasing, the above solution is preferably diluted 10-100 times with water, depending on the degree of contamination of the surfaces to be cleaned. A higher concentration of surfactant is used for more heavily contaminated surfaces. The obtained solution will act as a cleaning agent, and subsequently be degraded into 2-pentadecanone and CO_{2/}HCO₃⁻/CO₃²⁻ (depending on pH). This decomposition will to a great extent happen after disposal of the cleaning solution into the sewer system (considering household use), and the thus formed 2-pentadecanone is a naturally occurring, edible flavouring agent, which will be essentially harmless to the environment.

In industrial degreasing operations, where detergents end up in a large tank together with rinsing water, the formation of unwanted stable oil-in-water emulsions are often a problem. Oil droplets in such emulsions are formed from grease that has been removed in the degreasing operation, and the thus formed emulsions are stabilised by surfactants present in the detergent. Using, as in this example, the thermolabile class of surfactants of this invention in the detergent allows the user to either i) induce breaking of such emulsions through periodic heating of the liquid in the large tank or ii) realise a continuous emulsion breaking by adjusting the residence time of the tank and the tank temperature in such a way that the unwanted emulsions break continuously. The separated oil will form a layer on top of the rinsing water, and will therefore be easily removable through skimming or local pumping at the top of the tank. The 2-pentadecanone decomposition product that will be formed in this example may also accumulate in the top oil layer, and may then conveniently be removed and passed on for destruction together with the oil.

### Example 13a. Alkaline cleaning composition

The preparation prepared in this example may be suitable for use for example in dishwashing machine applications. The following ingredients are mixed in the proportions given:

| Component | Parts by weight |
|---|---|
| Surfactant precursor of Example 1 | 50 |
| NaOH | 50 |
| Berol 266 (Akzo Nobel) | 0-1 |
| Na-metasilicate·(H₂O)₅ | 20 |
| Na₃NTA | 80 |
| Deionised water | 850 |

NaOH, Berol 266 (if needed, see below), sodium metasilicate and Na₃NTA are dissolved in the distilled water. Just before use, the surfactant precursor is emulsified into the above solution using vigorous shearing (e.g. an Ultrathurrax mixer). In applications where the cleaning fluid is continuously recirculated and exposed to high shear and/or turbulent flow, e.g. through high pressure spraying etc, the auxiliary emulsifier Berol 266 and/or Ultrathurrax treatment may not be needed, and in this case can be left out of the formulation.

By selecting the temperature of the dishwashing process, the length of the washing program and the amount of the detergent (prepared as described above) introduced into the dishwasher, activation of the surfactant precursor could be obtained *in situ* in the dishwasher during the initial part of the washing program. Degradation of the surfactant will start immediately as soon as activation has occurred, already during the washing process, and will continue at a slower pace in the sewer system after the cleaning liquid has left the dishwasher. The surfactant will ultimately break down in the environment to 2-pentadecanone and CO₂/HCO₃⁻/CO₃²⁻ depending on pH. 2-Pentadecanone belongs to the so-called structural class II flavouring agents, and the acute toxicity of this type of compounds has been demonstrated to be extremely low (see e.g. WHO Food Additives Series 42:235-65 (1999); Tanii et al., Toxicology Letters 30:13-17 (1986)).

### Example 13b. Alkaline cleaning composition

The preparation prepared in this example is also suitable for use for example in dishwashing machine applications. 50 parts (by weight) of surfactant precursor prepared as in Example 1 are added to 290 parts of 0.5 M ethanolic solution of KOH (99.7 vol % ethanol and KOH), in order to activate the surfactant precursor. The activation of the surfactant precursor is allowed to proceed for 4 h, and then the obtained product is poured into an open beaker allowing the ethanol to evaporate at room temperature, optionally using gentle blowing with dry air over the sample to speed up evaporation.

The following ingredients are mixed in the proportions given:

| Component | Parts by weight |
|---|---|
| NaOH | 50 |
| Na-metasilicate·(H₂O)₅ | 20 |
| Na₃NTA | 80 |
| Deionised water | 850 |

NaOH, sodium metasilicate and Na₃NTA are dissolved in the distilled water. Just before use, the surfactant is added to the above solution.

Use of the resulting composition as a dishwasher detergent and the ensuing results and benefits are as described in Example 13a.

### Example 14. Detergent composition

A laundry detergent in which the conventional soap is replaced by a thermolabile surfactant according to the invention is prepared as follows:
6 parts (by weight) of surfactant precursor prepared as in Example 1 are added to 35 parts of 0.5 M ethanolic solution of KOH (99.7 % ethanol and KOH), in order to activate the surfactant precursor. The activation of the surfactant precursor is allowed to proceed for 4 h, and then the obtained product is poured into an open beaker allowing the ethanol to evaporate at room temperature, optionally using gentle blowing with dry air over the sample to speed up evaporation. When no more ethanol can be evaporated, the obtained activated surfactant residue is mixed with the following:

| Component | Function | Parts by weight |
|---|---|---|
| Berol OX 91-8 (Akzo Nobel) | Nonionic surfactant(C9-11 + 8EO) | 4 |
| Berol 537 (Akzo Nobel) | Nonionic surfactant(C11 + 7EO) | 4 |
| Hostapur SAS (Clariant) | Anionic surfactant (paraffin sulfonate) | 8 |
| Na-tripolyphosphate | Complexing agent | 20 |
| Na-sulphate | Filler | 15 |
| Na-carbonate | Builder/filler | 25 |
| Na-perborate | Bleach additive | 15 |
| Na-silicate | Corrosion inhibitor, anti-redeposition agent | 5 |
| CMC (carboxymethyl cellulose) | Anti-redeposition agent | 1 |
| EDTA | Complexing agent | 1 |

The detergent must be used shortly after preparation in order to avoid premature decomposition of the thermolabile surfactant.

### Example 15. Agro-chemical crop protection formulation

The preparation prepared in this example may be suitable for use in agricultural situations, for the application of a certain beneficial substance (the active substance) to crops in a field. Suitable active substances are pesticides, weed-control agents and other compounds with a beneficial effect on crops. In this specific example, the active substance is (2,4-dichlorophenoxy) acetic acid, 2-ethylhexyl ester. (2,4-dichlorophenoxy) acetic acid is a well-known agricultural herbicide commonly designated 2,4-D (see e.g. Wilson RD et al., Env Tox Chem 16(6):1239-1246 (1997)). 2,4-D, 2-ethylhexyl ester is a liquid at room temperature. The following ingredients are mixed in the proportions given:

| Component | Parts by weight |
|---|---|
| 2,4-D, 2-ethylhexyl ester | 35 |
| Deionised water | 35 |
| Propylene glycol | 3 |
| Activated surfactant of Example 2a¹ | 20 |

| | |
|---|---|
| ¹Ethanolic solution as prepared in first sentence of Example 2a | |

In case a solid active substance is utilised, the active substance is first dissolved in a suitable solvent to reach the highest possible concentration in the range of 1-35 parts by weight. In case a liquid active substance is utilised, as in the present case, it may be used in pure form directly.

Deionised water, propylene glycol and activated surfactant are mixed in a separate beaker. Then, the solution of solid active substance, or the pure, liquid active substance, is slowly added to the aqueous solution under vigorous shearing, using e.g. an Ultrathurrax mixer.

The resulting, concentrated emulsion may be stored at refrigerator temperature. Before use, the concentrate should be homogenised and then diluted with water to a desired concentration (e.g. diluted 1:100). The resulting diluted emulsion is useful for crop protection. The surfactant will break down in the environment to harmless 2-pentadecanone and CO_{2/}HCO₃⁻/CO₃²⁻, depending on pH.

### Example 16. Alkyd emulsion for paint formulation

An alkyd emulsion for use in paint formulations is prepared as follows:
6 parts (by weight) of surfactant precursor prepared as in Example 1 are added to 35 parts 0.5 M ethanolic solution of KOH (99.7 vol % ethanol and KOH), in order to activate the surfactant precursor. The activation of the surfactant precursor is allowed to proceed for 4 h, and then the obtained product is poured into an open beaker allowing the ethanol to evaporate at room temperature, optionally using gentle blowing with dry air over the sample to speed up evaporation. When no more ethanol can be evaporated, just as much deionised water as is needed to fully dissolve the surfactant is added.

Optionally, a corresponding solution of a more hydrophobic surfactant, e.g. having a somewhat longer hydrophobic group (e.g. compound 14 or 18 in Table 1 above) may be prepared.

50 parts of alkyd resin (e g Uralac AD97 from DSM Coating Resins) is weighed in a separate container, and heated to a suitable temperature where the resin has a viscosity low enough for efficient emulsification. If Uralac AD97 is used, a suitable temperature is 40 °C.

The concentrated surfactant solution prepared above is heated to the temperature of the resin, and the resin is thoroughly mixed with the surfactant solution. In case of an acidic resin, a small amount of an aqueous solution of KOH or NaOH is added to neutralise the acid.

Deionised water is added very slowly during constant vigorous homogenisation. Addition of deionised water is continued until the total water content of the emulsion (including water added above in the surfactant solution and in any neutralisation) is 45 parts by weight. If a maximum in viscosity is observed, further water addition may be performed more rapidly. The emulsion is allowed to cool to room temperature under moderate homogenisation. Thereafter, the paint should be formulated and used immediately, so as to avoid premature decomposition of the surfactant.

### Example 17. Ink for flexographic printing

20 parts (by weight) of surfactant precursor prepared as in Example 1 are added to 116 parts of 0.5 M ethanolic solution of KOH (99.7 vol % ethanol and KOH), in order to activate the surfactant precursor. The activation of the surfactant precursor is allowed to proceed for 4 h, and then the obtained product is poured into an open beaker allowing the ethanol to evaporate at room temperature, optionally using gentle blowing with dry air over the sample to speed up evaporation. When no more ethanol can be evaporated, the obtained activated surfactant residue is mixed with the following:

| Component | Parts by weight |
|---|---|
| Joncryl 8055 (Johnson resins) | 600 |
| Flexiverse black 7 (LFD-4343, MEA based, SUN Chemical) | 300 |
| Water | 70 |
| Surfonyl DF70 (Air Products) | 10 |

Joncryl 8055 is a binder resin, Flexiverse black 7 is a black pigment paste, and Surfynol DF70 is a defoaming agent.

The components are mixed until a homogeneous product is obtained, and diluted with water to obtain the desired viscosity. The obtained ink is used immediately after preparation to avoid premature surfactant decomposition.

### Example 18. Coating formulation

A coating formulation suitable for coating of paper and/or board, e.g. using so-called curtain coating, is produced as follows:

| Component | Function | Parts by weight |
|---|---|---|
| Hydrocarb 60 (Omaya) | Calcium carbonate pigment | 80 (dry weight) |
| Supragloss 95 (Imerys) | Kaolin pigment | 20 (dry weight) |
| DL 935 (Dow Chemical) | Styrene/Butadiene latex binder | 14 (dry weight) |
| Sterocoll HT (BASF) | Synthetic co-binder (alkali swellable emulsion) | 0.05 (dry weight) |
| Activated surfactant of Example 2a¹ | Surfactant | 1 |

| | | |
|---|---|---|
| ¹Ethanolic solution as prepared in first sentence of Example 2a | | |

The above ingredients are thoroughly mixed together and the obtained mixture is diluted to a desired overall solid content, e g 65 %. The coating formulation obtained may be used for paper/board coating.

## Claims

1. Use of a compound having a hydrophobic moiety attached to a hydrophilic moiety, wherein the hydrophilic moiety comprises a β-keto acid group and the hydrophobic moiety is attached via a bond from a carbon or an oxygen of the hydrophobic moiety to a carbon of the β-keto acid group, provided that the β-carbon of the β-keto acid group does not form part of a carboxyl or ester group, or a salt thereof, as a surfactant.

2. Use according to claim 1, wherein the hydrophobic moiety is attached via a bond from a carbon of the hydrophobic moiety to a carbon of the β-keto acid group.

3. Use according to claim 1 or 2, wherein the hydrophobic moiety is attached to the α-carbon of the β-keto acid group.

4. Use according to claim 1 or 2, wherein the hydrophobic moiety is attached to the β-carbon of the β-keto acid group.

5. Use according to claim 3, wherein the hydrophilic moiety is an acetoacetic acid group.

6. Use as a surfactant of a compound having the general formula I 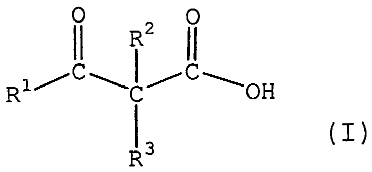 wherein at least one of R¹, R² and R³ is a hydrophobic moiety,
R² and/or R³ as hydrophobic moiety/moieties being independently selected from -C-R⁴ and -O-R⁴, R¹ as hydrophobic moiety being -C-R⁴, wherein R⁹ is any hydrophobic group;
with the proviso that R¹ is not -O-R⁵, wherein R⁵ is any substituent;
or of a salt of said compound.

7. Use according to claim 6, wherein the hydrophobic moiety is -C-R⁴, R⁴ being any hydrophobic group.

8. Use according to claim 6 or 7, wherein at least one of R² and R³ is a hydrophobic moiety.

9. Use according to claim 6 or 7, wherein R¹ is a hydrophobic moiety.

10. Use according to any one of the preceding claims, wherein the at least one hydrophobic moiety is independently selected from a straight-chain, branched-chain or cyclic, saturated or unsaturated, optionally substituted, aliphatic group; an optionally substituted aromatic group; an optionally substituted hydrophobic polyoxyalkylene group; an optionally substituted perfluoroalkyl group; an optionally substituted polysiloxane group; a lignin or rosin derivative; and any combination thereof.

11. Use according to claim 10, wherein the at least one hydrophobic moiety is independently selected from a straight-chain, branched-chain or cyclic, saturated or unsaturated, optionally substituted, aliphatic group; an optionally substituted aromatic group; or a combination thereof.

12. Use according to claim 11, wherein the at least one hydrophobic moiety independently is a straight-chain or branched-chain, saturated or unsaturated, optionally substituted, C₁-C₃₀ alkyl.

13. Use according to claim 12, wherein the at least one hydrophobic moiety independently is a straight-chain or branched-chain, saturated or unsaturated, optionally substituted, C₈-C₂₂ alkyl.

14. Use according to claim 13, wherein the at least one hydrophobic moiety is dodecyl.

15. Use according to any one of the preceding claims, wherein the surfactant is an anionic surfactant.

16. Use according to any one of the preceding claims, wherein the surfactant is a dispersing agent.

17. A dispersion comprising solid particles, liquid droplets or gas bubbles dispersed, as an internal phase, in a fluid, as an external phase, by means of a surfactant, as a dispersing agent, wherein said surfactant is a compound as defined in any one of claims 1-16.

18. A dispersion according to claim 17, which is an aerosol, a colloid, an emulsion, a foam, a gel, a sol or a suspension.

19. A method for breaking a dispersion comprising solid particles, liquid droplets or gas bubbles dispersed, as an internal phase, in a fluid, as an external phase, by means of a surfactant as a dispersing agent, wherein said surfactant is a compound as defined in any one of claims 1-16, said method comprising the steps of
a) providing said dispersion at a temperature where it is substantially stable; and
b) setting the temperature of said dispersion, so as to achieve a desired decomposition rate of the surfactant.

20. A method according to claim 19, wherein step a) is performed at a temperature in the range from about 0 to about 40 °C, preferably from about 10 to about 30 °C.

21. A method according to claim 19 or 20, wherein step b) is performed by raising the temperature to a range from about 40 to about 100 °C, preferably from about 60 to about 95 °C.

22. A method according to any one of claims 19-21, wherein step a) is performed by
i) providing a surfactant precursor, wherein the surfactant precursor is an ester or amide of a compound as defined in any one of claims 1-16;
ii) activating said surfactant precursor to a surfactant, wherein the surfactant is a compound as defined in any one of claims 1-16; and
iii) dispersing a mixture of said internal phase, said external phase and said surfactant.

23. A method according to claim 22, wherein in step i) the surfactant precursor is an ester of a compound as defined in any one of claims 1-16.

24. A method according to any one of claims 19-21, wherein step a) is performed by
i) providing a mixture of said internal phase, said external phase and a surfactant precursor, wherein the surfactant precursor is an ester of a compound as defined in any one of claims 1-16;
ii) activating said surfactant precursor to a surfactant, wherein the surfactant is a compound as defined in any one of claims 1-16; and
iii) dispersing said mixture.

25. A method according to claim 24, wherein in step i) the surfactant precursor is an ester of a compound as defined in any one of claims 1-16.

26. A method according to any one of claims 22-25, wherein said surfactant precursor is activated by saponification or hydrolysis.

27. A microemulsion comprising, as surfactant, a compound as defined in any one of claims 1-16.

28. A method for breaking a microemulsion according to claim 27, said method comprising the steps of
a) providing said microemulsion at a temperature where it is substantially stable; and
b) setting the temperature of said microemulsion, so as to achieve a desired decomposition rate of the surfactant.

29. A method according to claim 28, wherein step a) is performed at a temperature in the range from about 0 to about 40 °C, preferably from about 10 to about 30 °C.

30. A method according to claim 28 or 29, wherein step b) is performed by raising the temperature to a range from about 40 to about 100 °C, preferably from about 60 to about 95 °C.

31. Use of an ester of a compound as defined in any one of claims 1-16 as a surfactant precursor.

32. Use according to claim 31, wherein the ester is selected from the group consisting of a C₁-C₆ straight or branched alkyl ester; a benzyl ester; a β, β, β-trichloroethyl ester; and a monoglyceride (glycerol ester).

33. Use of an amide of a compound as defined in any one of claims 1-16 as a surfactant precursor.

34. A method for reducing the surface tension between a liquid and another phase, comprising adding to said liquid, as a surfactant, a compound having a hydrophobic moiety attached to a hydrophilic moiety, wherein the hydrophilic moiety comprises a β-keto acid group and the hydrophobic moiety is attached via a bond from a carbon or an oxygen of the hydrophobic moiety to a carbon of the β-keto acid group, provided that the β-carbon of the β-keto acid group does not form part of a carboxyl or ester group, or a salt thereof.

35. A method according to claim 34, in which said surfactant is as defined in any one of claims 2-16.

36. Use of a compound as defined in any one of claims 1-16 as a surfactant in a lubrication composition.

37. Use of a compound as defined in any one of claims 1-16 as a surfactant in a degreasing composition.

38. Use of a compound as defined in any one of claims 1-16 as a surfactant in a cleaning solution.

39. Use of a compound as defined in any one of claims 1-16 as a surfactant in an alkaline detergent composition.

40. Use of a compound as defined in any one of claims 1-16 as a surfactant in a laundry detergent composition.

41. Use of a compound as defined in any one of claims 1-16 as a surfactant in an emulsion of an active substance intended to be applied to agricultural crops.

42. Use of a compound as defined in any one of claims 1-16 as a surfactant in an alkyd emulsion for paint formulations.

43. Use of a compound as defined in any one of claims 1-16 as a surfactant in an ink composition.

44. Use of a compound as defined in any one of claims 1-16 as a surfactant in a coating composition.

## Patentansprüche

1. Verwendung einer Verbindung mit einer hydrophoben Einheit, die an eine hydrophile Einheit gebunden ist, wobei die hydrophile Einheit eine β-Ketosäuregruppe umfasst und die hydrophobe Einheit über eine Bindung von einem Kohlenstoff oder einem Sauerstoff der hydrophoben Einheit zu einem Kohlenstoff der β-Ketosäuregruppe gebunden ist, mit der Maßgabe, dass der β-Kohlenstoff der β-Ketosäuregruppe nicht Teil einer Carboxyl- oder Estergruppe ist, oder eines Salzes davon als Tensid.

2. Verwendung nach Anspruch 1, wobei die hydrophobe Einheit über eine Bindung von einem Kohlenstoff der hydrophoben Einheit zu einem Kohlenstoff der β-Ketosäuregruppe gebunden ist.

3. Verwendung nach Anspruch 1 oder 2, wobei die hydrophobe Einheit an den α-Kohlenstoff der β-Ketosäuregruppe gebunden ist.

4. Verwendung nach Anspruch 1 oder 2, wobei die hydrophobe Einheit an den β-Kohlenstoff der β-Ketosäuregruppe gebunden ist.

5. Verwendung nach Anspruch 3, wobei es sich bei der hydrophilen Einheit um eine Acetessigsäuregruppe handelt.

6. Verwendung einer Verbindung der allgemeinen Formel I 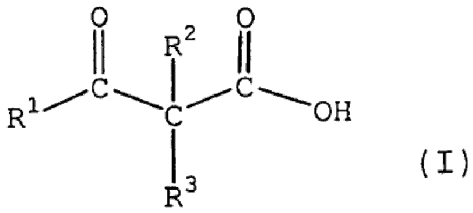 worin mindestens einer der Reste R¹, R² und R³ für eine hydrophobe Einheit steht,
wobei R² und/oder R³ als hydrophobe Einheit bzw. hydropobe Einheiten unabhängig unter -C-R⁴ und -O-R⁴ ausgewählt sind und R¹ als hydrophobe Einheit für -C-R⁴ steht, wobei R⁴ für eine beliebige hydrophobe Gruppe steht;
mit der Maßgabe, dass R¹ nicht für -O-R5 steht, wobei R⁵ für einen beliebigen Substituenten steht; oder eines Salzes der Verbindung als Tensid.

7. Verwendung nach Anspruch 6, wobei die hydrophobe Einheit -C-R⁴ ist, wobei R⁴ für eine beliebige hydrophobe Gruppe steht.

8. Verwendung nach Anspruch 6 oder 7, wobei mindestens einer der Reste R² und R³ für eine hydrophobe Einheit steht.

9. Verwendung nach Anspruch 6 oder 7, wobei R¹ für eine hydrophobe Einheit steht.

10. Verwendung nach einem der vorhergehenden Ansprüche, wobei die mindestens eine hydrophobe Einheit unabhängig unter einer geradkettigen, verzweigtkettigen oder cyclischen, gesättigten oder ungesättigten, gegebenenfalls substituierten aliphatischen Gruppe; einer gegebenenfalls substituierten aromatischen Gruppe; einer gegebenenfalls substituierten hydrophoben Polyoxyalkylengruppe; einer gegebenenfalls substituierten Perfluoralkylgruppe; einer gegebenenfalls substituierten Polysiloxangruppe; einem Lignin- oder Kolophoniumderivat und einer beliebigen Kombination davon ausgewählt ist.

11. Verwendung nach Anspruch 10, wobei die mindestens eine hydrophobe Einheit unabhängig unter einer geradkettigen, verzweigtkettigen oder cyclischen, gesättigten oder ungesättigten, gegebenenfalls substituierten aliphatischen Gruppe; einer gegebenenfalls substituierten aromatischen Gruppe oder einer Kombination davon ausgewählt ist.

12. Verwendung nach Anspruch 11, wobei die mindestens eine hydrophobe Einheit unabhängig ein geradkettiges oder verzweigtkettiges, gesättigtes oder ungesättigtes, gegebenenfalls substituiertes C₁-C₃₀-Alkyl ist.

13. Verwendung nach Anspruch 12, wobei die mindestens eine hydrophobe Einheit unabhängig ein geradkettiges oder verzweigtkettiges, gesättigtes oder ungesättigtes, gegebenenfalls substituiertes C₈-C₂₂-Alkyl ist.

14. Verwendung nach Anspruch 13, wobei die mindestens eine hydrophobe Einheit Dodecyl ist.

15. Verwendung nach einem der vorhergehenden Ansprüche, wobei es sich bei dem Tensid um ein anionisches Tensid handelt.

16. Verwendung nach einem der vorhergehenden Ansprüche, wobei es sich bei dem Tensid um ein Dispergiermittel handelt.

17. Dispersion, umfassend feste Teilchen, Flüssigkeitströpfchen oder Gasblasen, die mittels eines Tensids als Dispergiermittel als interne Phase in einem Fluid als externer Phase dispergiert sind, wobei es sich bei dem Tensid um eine Verbindung gemäß einem der Ansprüche 1-16 handelt.

18. Dispersion nach Anspruch 17, bei der es sich um ein Aerosol, ein Kolloid, eine Emulsion, einen Schaum, ein Gel, ein Sol oder eine Suspension handelt.

19. Verfahren zum Brechen einer Dispersion, umfassend feste Teilchen, Flüssigkeitströpfchen oder Gasblasen, die mittels eines Tensids als Dispergiermittel als interne Phase in einem Fluid als externer Phase dispergiert sind, wobei es sich bei dem Tensid um eine Verbindung gemäß einem der Ansprüche 1-16 handelt, bei dem man
a) die Dispersion bei einer Temperatur, bei der sie weitgehend stabil ist, bereitstellt und
b) Die Temperatur der Dispersion so einstellt, dass man eine gewünschte Zersetzungsrate des Tensids erhält.

20. Verfahren nach Anspruch 19, bei dem man Schritt a) bei einer Temperatur im Bereich von etwa 0 bis etwa 40°C, vorzugsweise etwa 10 bis etwa 30°C, durchführt.

21. Verfahren nach Anspruch 19 oder 20, bei dem man Schritt b) durch Erhöhen der Temperatur auf einen Bereich von etwa 40 bis etwa 100°C, vorzugsweise etwa 60 bis etwa 95°C, durchführt.

22. Verfahren nach einem der Ansprüche 19-21, bei dem man Schritt a) durchführt, indem man
i) eine Tensidvorstufe bereitstellt, wobei es sich bei der Tensidvorstufe um einen Ester oder ein Amid einer Verbindung gemäß einem der Ansprüche 1-16 handelt;
ii) die Tensidvorstufe zu einem Tensid aktiviert, wobei es sich bei dem Tensid um eine Verbindung gemäß einem der Ansprüche 1-16 handelt; und
iii) eine Mischung der internen Phase, der externen Phase und des Tensids dispergiert.

23. Verfahren nach Anspruch 22, bei dem es sich in Schritt i) bei der Tensidvorstufe um einen Ester einer Verbindung gemäß einem der Ansprüche 1-16 handelt.

24. Verfahren nach einem der Ansprüche 19-21, bei dem man Schritt a) durchführt, indem man
i) eine Mischung der internen Phase, der externen Phase und einer Tensidvorstufe bereitstellt, wobei es sich bei der Tensidvorstufe um einen Ester einer Verbindung gemäß einem der Ansprüche 1-16 handelt;
ii) die Tensidvorstufe zu einem Tensid aktiviert, wobei es sich bei dem Tensid um eine Verbindung gemäß einem der Ansprüche 1-16 handelt; und
iii) die Mischung dispergiert.

25. Verfahren nach Anspruch 24, bei dem es sich in Schritt i) bei der Tensidvorstufe um einen Ester einer Verbindung gemäß einem der Ansprüche 1-16 handelt.

26. Verfahren nach einem der Ansprüche 22-25, bei dem man die Tensidvorstufe durch Verseifung oder Hydrolyse aktiviert.

27. Mikroemulsion, die als Tensid eine Verbindung gemäß einem der Ansprüche 1-16 umfasst.

28. Verfahren zum Brechen einer Mikroemulsion nach Anspruch 27, bei dem man
a) die Mikroemulsion bei einer Temperatur, bei der sie weitgehend stabil ist, bereitstellt und
b) die Temperatur der Mikroemulsion so einstellt, dass man eine gewünschte Zersetzungsrate des Tensids erhält.

29. Verfahren nach Anspruch 28, bei dem man Schritt a) bei einer Temperatur im Bereich von etwa 0 bis etwa 40°C, vorzugsweise etwa 10 bis etwa 30°C, durchführt.

30. Verfahren nach Anspruch 28 oder 29, bei dem man Schritt b) durch Erhöhen der Temperatur auf einen Bereich von etwa 40 bis etwa 100°C, vorzugsweise etwa 60 bis etwa 95°C, durchführt.

31. Verwendung eines Esters einer Verbindung gemäß einem der Ansprüche 1-16 als Tensidvorstufe.

32. Verwendung nach Anspruch 31, wobei der Ester aus der Gruppe bestehend aus einem geraden oder verzweigten C₁-C₆-Alkylester; einem Benzylester; einem β,β,β-Trichlorethylester und einem Monoglycerid (Glycerinester) ausgewählt ist.

33. Verwendung eines Amids einer Verbindung gemäß einem der Ansprüche 1-16 als Tensidvorstufe.

34. Verfahren zur Verringerung der Oberflächenspannung zwischen einer Flüssigkeit und einer anderen Phase, bei dem man eine Verbindung mit einer hydrophoben Einheit, die an eine hydrophile Einheit gebunden ist, wobei die hydrophile Einheit eine β-Ketosäuregruppe umfasst und die hydrophobe Einheit über eine Bindung von einem Kohlenstoff oder einem Sauerstoff der hydrophoben Einheit zu einem Kohlenstoff der β-Ketosäuregruppe gebunden ist, mit der Maßgabe, dass der β-Kohlenstoff der β-Ketosäuregruppe nicht Teil einer Carboxyl- oder Estergruppe ist, oder ein Salz davon als Tensid zu der Flüssigkeit gibt.

35. Verfahren nach Anspruch 34, bei dem das Tensid wie in einem der Ansprüche 2-16 definiert ist.

36. Verwendung einer Verbindung gemäß einem der Ansprüche 1-16 als Tensid in einer Schmierzusammensetzung.

37. Verwendung einer Verbindung gemäß einem der Ansprüche 1-16 als Tensid in einer Entfettungszusammensetzung.

38. Verwendung einer Verbindung gemäß einem der Ansprüche 1-16 als Tensid in einer Reinigungslösung.

39. Verwendung einer Verbindung gemäß einem der Ansprüche 1-16 als Tensid in einer alkalischen Reinigungszusammensetzung.

40. Verwendung einer Verbindung gemäß einem der Ansprüche 1-16 als Tensid in einer Waschmittelzusammensetzung.

41. Verwendung einer Verbindung gemäß einem der Ansprüche 1-16 als Tensid in einer Emulsion eines auf landwirtschaftliche Kulturpflanzen aufzubringenden Wirkstoffs.

42. Verwendung einer Verbindung gemäß einem der Ansprüche 1-16 als Tensid in einer Alkydemulsion für Anstrichmittelformulierungen.

43. Verwendung einer Verbindung gemäß einem der Ansprüche 1-16 als Tensid in einer Tintenzusammensetzung.

44. Verwendung einer Verbindung gemäß einem der Ansprüche 1-16 als Tensid in einer Beschichtungszusammensetzung.

## Revendications

1. Utilisation d'un composé ayant un motif hydrophobe fixé à un motif hydrophile, dans laquelle le motif hydrophile comprend un groupement acide β-cétonique et le motif hydrophobe est fixé, par l'intermédiaire d'une liaison à partir d'un carbone ou d'un oxygène du motif hydrophobe, à un carbone du groupement acide β-cétonique, à condition que le carbone β du groupement acide β-cétonique ne fasse pas partie d'un groupement carboxyle ou ester, ou d'un sel de celui-ci, comme agent tensioactif.

2. Utilisation selon la revendication 1, dans laquelle le motif hydrophobe est fixé, par l'intermédiaire d'une liaison à partir d'un carbone du motif hydrophobe, à un carbone du groupement acide β-cétonique.

3. Utilisation selon la revendication 1 ou 2, dans laquelle le motif hydrophobe est fixé au carbone α du groupement acide β-cétonique.

4. Utilisation selon la revendication 1 ou 2, dans laquelle le motif hydrophobe est fixé au carbone β du groupement acide β-cétonique.

5. Utilisation selon la revendication 3, dans laquelle le motif hydrophile est un groupement acide acétoacétique.

6. Utilisation comme agent tensioactif d'un composé répondant à la formule générale I 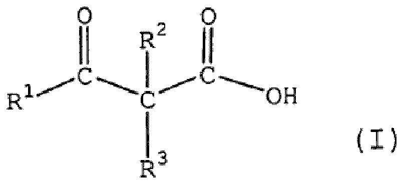 dans laquelle au moins l'un parmi R¹, R² et R³ est un motif hydrophobe,
R² et/ou R³ comme motif/motifs hydrophobe(s) étant choisi(s) indépendamment parmi -C-R⁴ et O-R⁴, R¹ comme motif hydrophobe étant -C-R⁴, où R⁴ est un groupement hydrophobe quelconque ;
à condition que R¹ ne soit pas -O-R⁵, où R⁵ est un substituant quelconque ;
ou d'un sel dudit composé.

7. Utilisation selon la revendication 6, dans laquelle le motif hydrophobe est -C-R⁴, R⁴ étant un groupement hydrophobe quelconque.

8. Utilisation selon la revendication 6 ou 7, dans laquelle au moins l'un parmi R² et R³ est un motif hydrophobe.

9. Utilisation selon la revendication 6 ou 7, dans laquelle R¹ est un motif hydrophobe.

10. Utilisation selon l'une quelconque des revendications précédentes, dans laquelle le au moins un motif hydrophobe est choisi indépendamment parmi un groupement aliphatique à chaîne linéaire, à chaîne ramifiée ou cyclique, saturé ou insaturé, éventuellement substitué ; un groupement aromatique éventuellement substitué ; un groupement polyoxyalkylène hydrophobe éventuellement substitué ; un groupement perfluoroalkyle éventuellement substitué ; un groupement polysiloxane éventuellement substitué ; un dérivé de lignine ou de colophane ; et une combinaison quelconque de ceux-ci.

11. Utilisation selon la revendication 10, dans laquelle le au moins un motif hydrophobe est choisi indépendamment parmi un groupement aliphatique à chaîne linéaire, à chaîne ramifiée ou cyclique, saturé ou insaturé, éventuellement substitué ; un groupement aromatique éventuellement substitué ; ou une combinaison de ceux-ci.

12. Utilisation selon la revendication 11, dans laquelle le au moins un motif hydrophobe est indépendamment C₁-C₃₀alkyle à chaîne linéaire ou à chaîne ramifiée, saturé ou insaturé, éventuellement substitué.

13. Utilisation selon la revendication 12, dans laquelle le au moins un motif hydrophobe est indépendamment C₈-C₂₂alkyle à chaîne linéaire ou à chaîne ramifiée, saturé ou insaturé, éventuellement substitué.

14. Utilisation selon la revendication 13, dans laquelle le au moins un motif hydrophobe est dodécyle.

15. Utilisation selon l'une quelconque des revendications précédentes, dans laquelle l'agent tensioactif est un agent tensioactif anionique.

16. Utilisation selon l'une quelconque des revendications précédentes, dans laquelle l'agent tensioactif est un agent de dispersion.

17. Dispersion comprenant des particules solides, des gouttelettes liquides ou des bulles de gaz dispersées, comme phase interne, dans un fluide, comme phase externe, au moyen d'un agent tensioactif, comme agent de dispersion, où ledit agent tensioactif est un composé tel que défini selon l'une quelconque des revendications 1-16.

18. Dispersion selon la revendication 17, qui est un aérosol, un colloïde, une émulsion, une mousse, un gel, un sol ou une suspension.

19. Méthode de fragmentation d'une dispersion comprenant des particules solides, des gouttelettes liquides ou des bulles de gaz dispersées, comme phase interne, dans un fluide, comme phase externe, au moyen d'un agent tensioactif, comme agent de dispersion, où ledit agent tensioactif est un composé tel que défini selon l'une quelconque des revendications 1-16, ladite méthode comprenant les étapes consistant à
a) fournir ladite dispersion à une température à laquelle elle est sensiblement stable ; et
b) régler la température de ladite dispersion, de façon à obtenir un taux de décomposition souhaité de l'agent tensioactif.

20. Méthode selon la revendication 19, dans laquelle l'étape a) est effectuée à une température dans la plage allant d'environ 0 à environ 40°C, préférablement d'environ 10 à environ 30°C.

21. Méthode selon la revendication 19 ou 20, dans laquelle l'étape b) est effectuée en augmentant la température jusqu'à une plage allant d'environ 40 à environ 100°C, préférablement d'environ 60 à environ 95°C.

22. Méthode selon l'une quelconque des revendications 19-21, dans laquelle l'étape a) est effectuée par
i) la fourniture d'un précurseur d'agent tensioactif, où le précurseur d'agent tensioactif est un ester ou un amide d'un composé tel que défini selon l'une quelconque des revendications 1-16 ;
ii) l'activation dudit précurseur d'agent tensioactif en un agent tensioactif, où l'agent tensioactif est un composé tel que défini selon l'une quelconque des revendications 1-16 ; et
iii) la dispersion d'un mélange de ladite phase interne, de ladite phase externe et dudit agent tensioactif.

23. Méthode selon la revendication 22, dans laquelle dans l'étape i), le précurseur d'agent tensioactif est un ester d'un composé tel que défini selon l'une quelconque des revendications 1-16.

24. Méthode selon l'une quelconque des revendications 19-21, dans laquelle l'étape a) est effectuée par
i) la fourniture d'un mélange de ladite phase interne, de ladite phase externe et d'un précurseur d'agent tensioactif, où le précurseur d'agent tensioactif est un ester d'un composé tel que défini selon l'une quelconque des revendications 1-16 ;
ii) l'activation dudit précurseur d'agent tensioactif en un agent tensioactif, où l'agent tensioactif est un composé tel que défini selon l'une quelconque des revendications 1-16 ; et
iii) la dispersion dudit mélange.

25. Méthode selon la revendication 24, dans laquelle dans l'étape i), le précurseur d'agent tensioactif est un ester d'un composé tel que défini selon l'une quelconque des revendications 1-16.

26. Méthode selon l'une quelconque des revendications 22-25, dans laquelle ledit précurseur d'agent tensioactif est activé par saponification ou hydrolyse.

27. Microémulsion comprenant, comme agent tensioactif, un composé tel que défini selon l'une quelconque des revendications 1-16.

28. Méthode de fragmentation d'une microémulsion selon la revendication 27, ladite méthode comprenant les étapes consistant à
a) fournir ladite microémulsion à une température à laquelle elle est sensiblement stable ; et
b) régler la température de ladite microémulsion, de façon à obtenir un taux de décomposition souhaité de l'agent tensioactif.

29. Méthode selon la revendication 28, dans laquelle l'étape a) est effectuée à une température dans la plage allant d'environ 0 à environ 40°C, préférablement d'environ 10 à environ 30°C.

30. Méthode selon la revendication 28 ou 29, dans laquelle l'étape b) est effectuée en augmentant la température jusqu'à une plage allant d'environ 40 à environ 100°C, préférablement d'environ 60 à environ 95°C.

31. Utilisation d'un ester d'un composé tel que défini selon l'une quelconque des revendications 1-16, comme précurseur d'agent tensioactif.

32. Utilisation selon la revendication 31, dans laquelle l'ester est choisi dans le groupe constitué par un ester d'alkyle en C₁-C₆ linéaire ou ramifié ; un ester de benzyle ; un ester de β,β,β-trichloroéthyle et un monoglycéride (ester de glycérol).

33. Utilisation d'un amide d'un composé tel que défini selon l'une quelconque des revendications 1-16, comme précurseur d'agent tensioactif.

34. Méthode de réduction de la tension superficielle entre un liquide et une autre phase, comprenant l'addition audit liquide, comme agent tensioactif, d'un composé ayant un motif hydrophobe fixé à un motif hydrophile, dans laquelle le motif hydrophile comprend un groupement acide β-cétonique et le motif hydrophobe est fixé, par l'intermédiaire d'une liaison à partir d'un carbone ou d'un oxygène du motif hydrophobe, à un carbone du groupement acide β-cétonique, à condition que le carbone β du groupement acide β-cétonique ne fasse pas partie d'un groupement carboxyle ou ester, ou d'un sel de celui-ci.

35. Méthode selon la revendication 34, dans laquelle ledit agent tensioactif est tel que défini selon l'une quelconque des revendications 2-16.

36. Utilisation d'un composé tel que défini selon l'une quelconque des revendications 1-16, comme agent tensioactif dans une composition de lubrification.

37. Utilisation d'un composé tel que défini selon l'une quelconque des revendications 1-16, comme agent tensioactif dans une composition de dégraissage.

38. Utilisation d'un composé tel que défini selon l'une quelconque des revendications 1-16, comme agent tensioactif dans une solution de nettoyage.

39. Utilisation d'un composé tel que défini selon l'une quelconque des revendications 1-16, comme agent tensioactif dans une composition de détergent alcaline.

40. Utilisation d'un composé tel que défini selon l'une quelconque des revendications 1-16, comme agent tensioactif dans une composition de détergent pour lessive.

41. Utilisation d'un composé tel que défini selon l'une quelconque des revendications 1-16, comme agent tensioactif dans une émulsion d'une substance active prévue pour être appliquée à des cultures agricoles.

42. Utilisation d'un composé tel que défini selon l'une quelconque des revendications 1-16, comme agent tensioactif dans une émulsion alkyde pour des formulations de peinture.

43. Utilisation d'un composé tel que défini selon l'une quelconque des revendications 1-16, comme agent tensioactif dans une composition d'encre.

44. Utilisation d'un composé tel que défini selon l'une quelconque des revendications 1-16, comme agent tensioactif dans une composition de revêtement.
